# EUROPÄISCHE PATENTSCHRIFT

(11) **EP 2 025 382 B1**
(45) Veröffentlichungstag und Bekanntmachung des Hinweises auf die Patenterteilung: **09.12.2015**
(21) Anmeldenummer: 08104647.6
(22) Anmeldetag: 07.07.2008
(51) Int. Cl.: B01D 5/00, B01D 19/00, B01D 53/00

(54) **VERFAHREN UND VORRICHTUNG ZUR BEHANDLUNG VON PRODUKTEN MIT EINEM GASSTROM**
METHOD AND DEVICE FOR TREATING PRODUCTS WITH A GAS FLOW
PROCÉDÉ ET DISPOSITIF DE TRAITEMENT DE PRODUITS À L'AIDE D'UN FLUX DE GAZ

(30) Priorität: 25.07.2007 DE 102007034787
(43) Veröffentlichungstag der Anmeldung: 18.02.2009
(73) Patentinhaber: Messer France S.A.S., 92816 Puteaux Cedex (FR)
(72) Erfinder: Matheoud, Patrick, 92390 Villeneuve La Garenne (FR); Quetin, Gilles, 75003 Paris (FR)
(74) Vertreter: Münzel, Joachim R.

(56) Entgegenhaltungen:
- WO-A2-2007/013829
- DE-A1- 3 149 847
- DE-C1- 19 812 960
- GB-A- 992 062
- US-A- 4 322 265
- US-A- 4 437 940

## Beschreibung

Die Erfindung betrifft ein Verfahren zum Behandeln eines Produkts mit einem Gasstrom, bei dem der Gasstrom durch Kontakt mit dem Produkt mit einem Stoff beladen wird, und der Gasstrom anschließend zumindest teilweise vom beladenen Stoff befreit wird. Die Erfindung betrifft des Weiteren eine entsprechende Vorrichtung.

Zur Trocknung eines Produkts oder zur Befreiung eines Produkts von einem Stoff, beispielsweise einem Lösungsmittel, ist es bekannt, das mit dem Stoff beladene Produkt mit einem Gasstrom in Kontakt zu bringen, der die im Produkt enthaltene Feuchte bzw. den im Produkt enthaltenen Stoff aufnimmt. Als Gasstrom kommt dabei üblicherweise Luft zum Einsatz, jedoch können auch andere Gase wie Stickstoff, Edelgase oder Kohlendioxid zum Einsatz kommen. Der beladene Gasstrom wird anschließend abgeführt.

So ist beispielsweise aus der DE 28 37 216 A1 ein Verfahren zur Wiedergewinnung von Lösungsmitteln bekannt, die in einem Ofen beim Härten von Überzügen auf Lösungsmittelbasis verdampfen. Dabei wird dem Ofen ein Inertgasstrom zugeführt, der das verdampfte Lösungsmittel mit sich reißt. Der mit dem Lösungsmittel beladene Gasstrom wird anschließend in einer Kondensationsanlage vom Lösungsmittel gereinigt. Das gereinigte Gas, üblicherweise Stickstoff, wird anschließend in die Atmosphäre abgegeben.

Um den Verbrauch an Gas zu senken, könnte versucht werden, das beladene Abgas aufzufangen und vom beladenen Stoff zu reinigen, um es anschließend wieder auf den zur Behandlung des Produkts geforderten Betriebsdruck zu bringen. Diese Prozedur wäre jedoch außerordentlich aufwändig und zudem mit einem hohem Energieverbrauch sowie mit hohen und apparativen Kosten verknüpft.

Die WO 2007/013829 A1 beschreibt ein Verfahren zum Reinigen von Rohöl von Verunreinigungen, wie Wasser oder gelöste gasförmige Kohlenwasserstoffe, bei dem ein Gasstrom mit hoher Geschwindigkeit entlang der Oberfläche des zu behandelnden Öls geführt wird. Durch diese Strömungsführung wird in einem lokalen Bereich ein Unterdruck über der Oberfläche des zu behandelnden Öls erzeugt, aufgrund dessen im Öl enthaltene Verunreinigungen ausgasen und mit dem Prozessgasstrom ausgetragen werden. Der beladene Gasstrom wird anschließend einer Reinigungsstufe zugeführt. Um einen hinreichenden Reinigungseffekt zu erzielen, wird der Gasstrom dabei im Kreislauf geführt und mittels einer Fördereinrichtung, wie beispielsweise einem Kompressor, mehrfach über das zu behandelnde Produkt geführt. Auch diese Vorgehensweise ist mit einem beträchtlichen Energieaufwand verbunden.

Aufgabe der Erfindung ist somit, ein Verfahren der eingangs genannten Art derart zu verbessern, dass der Verbrauch an Gas und/oder Energie reduziert wird.

Gelöst wird diese Aufgabe durch ein Verfahren mit den Merkmalen des Patentanspruchs 1 sowie mit einer Vorrichtung mit den Merkmalen des Patentanspruchs 3.

Ein Verfahren zur Behandlung eines Produkts mit einem Gasstrom, bei dem der Gasstrom durch Kontakt mit dem Produkt mit einem Stoff beladen wird, und der Gasstrom anschließend zumindest teilweise vom beladenen Stoff befreit wird, und bei dem vom beladenen Gasstrom ein Teilstrom abgetrennt und dem unbeladenen Gasstrom zugeführt wird, wobei der abgetrennte Teilstrom des beladenen Gasstroms eine Reinigungsstufe durchläuft, ist erfindungsgemäß dadurch gekennzeichnet, dass in der Reinigungsstufe der abgetrennte Teilstrom mit dem Kälteinhalt eines kryogenen Mediums in thermischen Kontakt gebracht wird, wobei als kryogenes Medium in der Reinigungsstufe verflüssigtes Gas zum Einsatz kommt, das beim Wärmetausch mit dem abgetrennten Teilstrom verdampft und dem unbeladenen Gasstrom zugeführt wird.

Auf diese Weise wird der Verbrauch an Gas deutlich reduziert. Als "Stoffe", die vom Produkt entfernt werden sollen, werden hier Stoffe jedweder Konsistenz verstanden, die vom Gasstrom aufgenommen oder mitgerissen werden können, wie beispielsweise Wasser in Form von Dampf und/oder Tröpfchen, wässerige Lösungen, Lösungsmittel, Ausgasungen sowie Feststoffpartikel oder Aerosole.

Bevorzugt wird dabei der Teilstrom an einem Injektor in den unbeladenen Gasstrom eingesaugt. Als "Injektor" wird hier eine Einrichtung verstanden, bei der das Gas des Teilstroms aufgrund des Venturi-Effekts in die Zuleitung für das unbeladene Gas eingespeist wird. Dadurch kann auf den Einsatz von Fördersystemen wie beispielsweise Pumpen werden und der Energieverbrauch ist somit besonders niedrig.

Die Erfindung sieht vor, dass der zu reinigende Teilstrom mit dem Kälteinhalt eines kryogenen Mediums in thermischen Kontakt gebracht wird. Wird dabei der Siedepunkt des zuvor gas- oder dampfförmig im beladenen Gasstrom anwesenden Stoffes unterschritten, kondensiert dieser aus und kann aufgefangen und entsorgt werden. Um besonders hohe Reinigungsgrade, insbesondere bei der Rückgewinnung von Lösungsmitteln zu erzielen, kann auch eine Anlage zur Kryokondensation verwendet werden, wie sie beispielsweise in der EP 1 674 140 A1 oder der EP1 602 401 A1 beschrieben ist.

Die Aufgabe der Erfindung wird auch durch eine Vorrichtung zum Behandeln eines Produkts mit einem Gasstrom gelöst, die einen Reaktor, in dem das mit einem Stoff beladene Produkt mit dem Gasstrom in Kontakt gebracht wird, eine Zuleitung für den unbeladenen Gastrom und eine Ableitung für den mit dem Stoff beladenen Gasstrom umfasst, und die Mittel zum Reinigen von zumindest einem Teilstrom des beladenen Gasstroms und Mitteln zum Zuführen des gereinigten Teilstroms in den unbeladenen Gasstrom aufweist, und die dadurch gekennzeichnet ist, dass als Reinigungsstufe eine kryogene Gasreinigungseinrichtung zum Einsatz kommt, bei der zumindest der abgetrennte Teilstrom in wenigstens einem Wärmetauscher mit dem Kälteinhalt eines kryogenen Mediums in thermischen Kontakt gebracht wird, wobei als kryogenes Medium der unbeladene Gasstrom zum Einsatz kommt.

Als bevorzugtes Mittel zum Zuführen des gereinigten Teilstroms in den unbeladenen Gasstrom ist dabei ein Injektor vorgesehen, durch den der Teilstrom mit Hilfe des Venturieffekts in den Gasstrom des unbeladenen Gases eingesaugt wird.

Die Erfindung sieht als Reinigungsstufe eine kryogene Gasreinigung vor, bei der der zu reinigende Teilstrom mit dem Kälteinhalt eines kryogenen Mediums in thermischen Kontakt kommt, wodurch der im Gas enthaltene Stoff auskondensiert. Um besonders hohe Reinigungsgrade, insbesondere bei der Rückgewinnung von Lösungsmitteln zu erzielen, kann auch eine Anlage zur Kryokondensation verwendet werden, wie sie beispielsweise in der EP 1 674 140 A1 oder der EP1 602 401 A1 beschrieben ist.

Als kryogenes Medium kommt erfindungsgemäß der unbeladene Gasstrom selbst zum Einsatz. Dabei wird das unbeladene Gas, beispielsweise Stickstoff, im tiefkalten, insbesondere verflüssigten Zustand bereitgestellt und zumindest in einem Teilstrom einem Wärmetauscher zugeführt, in welchem es in thermischen Kontakt mit dem beladenen Teilstrom gebracht wird.

Ergänzend zur erfindungsgemäßen Lösung mit einem Wärmetauscher als Reinigungsstufe sieht eine andere Ausgestaltung der Erfindung vor, dass die Reinigungsstufe einen Filter, einen Zyklon oder einen Separator umfasst. Ein Filter hält insbesondere feste Stoffe zurück. Auch mehrere Filter können zum Einsatz kommen, die abwechselnd zur Reinigung des Gasstroms verwendet und anschließend manuell oder automatisch gereinigt werden. Ein Zyklon ist insbesondere zur Abtrennung flüssiger Stoffe geeignet. Ein Separator kann zur Abtrennung fester und/oder flüssiger Stoffe im kontinuierlichen Betreib eingesetzt werden.

In einer anderen und gleichfalls vorteilhaften Weiterbildung der Erfindung umfasst die Reinigungsstufe einen Adsorber, wie beispielsweise in der DE 195 27 960 A1 beschrieben.

Insbesondere beim Einsatz zum Trocknen umfasst die Reinigungsstufe bevorzugt um eine konventionelle Kältemaschine, etwa eine Absorptions- oder eine Kompressionskältemaschine.

Anhand der Zeichnungen sollen Ausführungsbeispiele der Erfindung näher erläutert werden. In schematischen Anzeigen zeigen:
- Fig. 1:: Eine erfindungsgemäße Vorrichtung in einer ersten Ausführungsform,
- Fig. 2:: Eine erfindungsgemäße Vorrichtung in einer zweiten Ausführungsform
- Fig. 3:: Eine erfindungsgemäße Vorrichtung in einer dritten Ausführungsform.

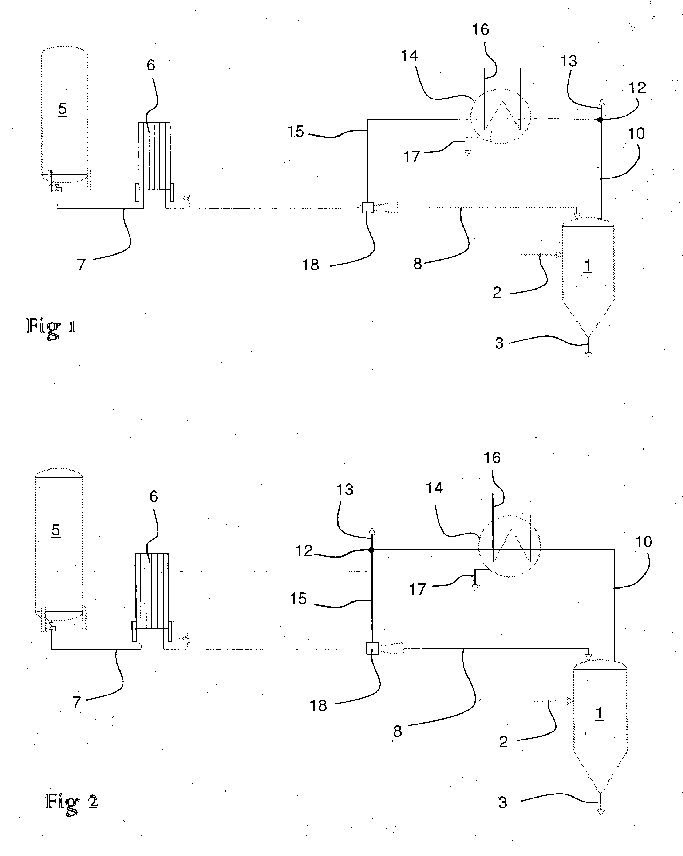

In den Zeichnungen nach Fig. 1 bis Fig. 3 sind gleiche Bestandteile mit den gleichen Bezugsziffern versehen.

Allen Anordnungen gemeinsam ist ein Gefäß oder Reaktor 1 in dem ein zu behandelndes Produkt mit einem Gasstrom in Kontakt gebracht wird, wobei ein im Produkt enthaltender Stoff vom Gasstrom aufgenommen wird. Der Stoff kann dabei als Gas, in flüssiger Form oder in Form von Feststoffpartikeln vorliegen; beispielsweise handelt es sich bei dem Stoff um Wasser oder um ein Lösungsmittel. Gas-Mengenfluss sowie Druck und Temperatur im Reaktor 1 richten sich dabei nach den jeweiligen Erfordernissen und werden vor Inbetriebnahme oder während des Betriebs entsprechend eingestellt. Die Zuführung des Produkts erfolgt über eine Zuleitung 2. Je nach Art des Reaktors 1 erfolgt die Zuführung kontinuierlich oder chargenweise. Das in Reaktor 1 behandelte Produkt wird über eine Ausleitung 3 entfernt. Bei den Leitungen 2, 3 handelt es sich im Falle von flüssigen oder rieselfähigen Produkten üblicherweise um Rohrleitungen; es kommen jedoch auch andere Fördersysteme in Betracht, beispielsweise Förderbänder o.ä.

Als Reinigungsgas kommt in den Ausführungsbeispielen Stickstoff zum Einsatz, der im flüssigen Zustand in einem Tank 5 bereitgestellt wird und über eine Leitung 7 einem Verdampfer, beispielsweise einem Kaltvergaser 6 (nur in den Ausführungsbeispielen nach Fig. 1 und Fig. 2) zugeführt wird. Das verdampfte Gas bildet einen Gasstrom, der über eine Leitung 8 in den Reaktor 1 eingeleitet wird, in dem es in direkten Kontakt mit dem Produkt gebracht wird. Anstelle des in flüssiger Form gelagerten Stickstoffs kann auch direkt gasförmiger Stickstoff einer entsprechenden Gasversorgung, beispielsweise einem Flaschenbündel oder einer Rohrleitung, entnommen werden. Anstelle von Stickstoff kann auch ein anderes Gas oder Gasgemisch zum Einsatz kommen; als Beispiele seien hier Luft, Kohlendioxid oder Edelgas genannt. Wesentlich für die Wahl des Reinigungsgases ist, dass es nicht oder zumindest nicht nennenswert mit dem zu behandelnden Produkt chemisch reagiert. Der zu entfernende Stoff, also beispielsweise das Wasser oder das Lösungsmittel, wird lediglich physikalisch vom Produkt getrennt und im Gasstrom mitgerissen.

Im Reaktor 1 durchläuft der Gasstrom eine oder mehrere Stufen, in denen der Gasstrom mit einem im Produkt enthaltenen bzw. dem Produkt anhaftenden Stoff beladen wird. Der beladene Gasstrom wird anschließend über eine Ableitung 10 vom Reaktor 1 abgeführt. Der beladene Gasstrom wird anschließend an einer Verzweigungsstelle 12 aufgeteilt in einen ersten Teilstrom, der über eine Abgasleitung 13 abgeführt wird, um in die Atmosphäre abgeblasen oder einer sonstigen Verwertung zugeführt zu werden, und in einen zweiten Teilstrom, der, nach Durchlaufen einer Reinigungsstufe 14, über eine Leitung 15 wiederum dem unbeladenen Gasstrom in der Leitung 8 zugeführt wird. Das Mengenverhältnis der beiden Teilströme hängt von den in den Leitungen 8, 13, 15 vorliegenden Druckverhältnissen ab und kann über eine entsprechende Auslegung der Leitungen 8, 13,15 oder über geeignete Armaturen festgelegt werden. Die Art der Reinigungsstufe 14 hängt von der jeweiligen Reinigungsaufgabe ab. Es kann sich dabei um einen Filter, einen Zyklon, um Absorptionsstufen, um Kühleinrichtungen oder um eine Kombination dieser Einrichtungen handeln. In den hier gezeigten Ausführungsbeispielen handelt es sich bei der Reinigungsstufe 14 um eine Kühleinrichtung in Gestalt einer Einrichtung zur kryogenen Gasreinigung, die insbesondere zum Entfernen von Lösungsmitteln geeignet ist. Dabei wird der der beladene Gasstrom mit einem kryogenen Kältemittel, beispielsweise Stickstoff im flüssigen oder tiefkalten gasförmigen Zustand, das über eine Zuleitung 16 herangeführt wird, in thermischen Kontakt gebracht und stark abgekühlt. Bei der Abkühlung kondensiert das im Gasstrom enthaltene Lösungsmittel aus. Das Kondensat wird aufgefangen, über eine Ableitung 17 abgezogen und anschließend entsorgt oder einer weiteren Verwertung zugeführt. Derartige Einrichtungen zur kryogenen Gasreinigung sind beispielsweise in der EP 1 674 140 A1 oder der EP 1 602 401 A1 beschrieben, auf die hier ausdrücklich Bezug genommen wird. Bei diesen Gegenständen erfolgt die Gasreinigung in mindestens zwei aufeinander folgenden Stufen, die jeweils durch mindestens einen indirekten Wärmetauscher realisiert werden. Dabei wird darauf geachtet, dass zwischen dem zu reinigenden Gasstrom und dem Kühlmedium jeweils ein möglichst geringer Temperaturunterschied besteht, um insbesondere die Entstehung von Aerosolen zu unterbinden.

Die Unterschiede zwischen den Ausführungsbeispielen betreffen die Auftrennung der Teilströme des beladenen Gasstroms und die Reinigungsstufe 14.

In der in Fig. 1 gezeigten ersten Ausführungsform erfolgt die Auftrennung der beiden Teilströme vor der Reinigung des dem unbeladenen Gasstrom zuzuführenden Teilstroms. Die Verzweigungsstelle 12 ist strömungstechnisch vor der Reinigungsstufe 14 angeordnet. Der über die Abgasleitung 13 abgeführte Teilstrom ist also nach wie vor mit dem Stoff beladen. Es wird nur der Teilstrom durch die Reinigungsstufe 14 geführt, der tatsächlich über die Leitung 15 dem unbeladenen Gasstrom in der Leitung 8 zugeführt wird. Eine solche Anordnung eignet sich insbesondere dann, wenn der Gasstrom zur Trocknung des Produkts bestimmt ist, oder generell, wenn der Stoff, mit dem der Gasstrom beladen ist, nicht schädlich für die Umwelt oder für eine nachfolgende Verwendung des Gasstroms ist.

Im Ausführungsbeispiel nach Fig. 2 erfolgt die Auftrennung der beiden Teilströme erst nach der Reinigung des gesamten beladenen Gasstroms. Die Verzweigungsstelle 12 ist also strömungstechnisch hinter der Reinigungsstufe 14 vorgesehen. Auch der über die Abgasleitung 13 abgeführte Teilstrom ist somit gereinigt. Eine solche Anordnung eignet sich insbesondere in den Fällen, in denen gesetzliche Vorgaben zu Grenzwerten bezüglich des Stoffes, mit dem der Gasstrom beladen ist, einzuhalten sind, insbesondere also, wenn von dem Stoff eine potenzielle Gefährdung für die Umwelt ausgeht.

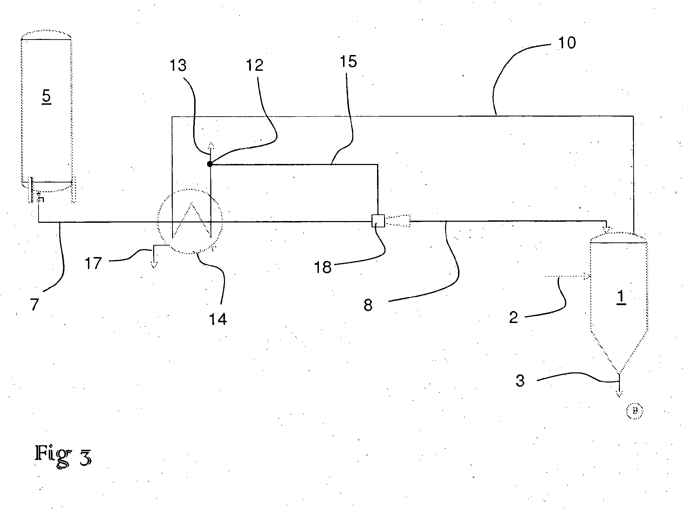

Im Ausführungsbeispiel nach Fig. 3 wird das unbeladene Gas zur kryogenen Reinigung des beladenen Gasstroms eingesetzt. Dabei durchläuft der aus dem Tank 5 entnommene Flüssigstickstoff - im Unterschied zu den Ausführungsbeispielen nach Fig. 2 und Fig. 3 - keinen Kaltvergaser, sondern der Stickstoff gelangt über die vorzugsweise wärmeisolierte Leitung 7 in noch flüssigem Zustand in die Reinigungsstufe 14. In der Reinigungsstufe 14 findet ein Wärmeaustausch beladene Gastrom kühlt sich dabei zumindest auf einen Temperaturwert unterhalb der Kondensationstemperatur des Stoffes ab, mit dem der Gasstrom beladen ist. Der Stoff kondensiert bzw. friert aus und kann über die Ableitung 17 entfernt werden. Der gereinigte Gasstrom wird anschließend an der Verzweigungsstelle 12 aufgeteilt, wobei ein Teilstrom dem unbeladenen Strom in Leitung 8 zugeführt wird. Entsprechend dem Ausführungsbeispiel nach Fig. 1 kann im Übrigen die Verzweigungsstelle strömungstechnisch auch vor der Reinigungsstufe 14 angeordnet sein.

Das Ausführungsbeispiel gem. Fig. 3 zeigt eine ideale Anordnung, in der der Kälteinhalt des verflüssigten Kältemittels exakt zur Reinigung des beladenen Gasstroms ausreicht. Es kann indes zur Herstellung einer ausreichenden Reinigungswirkung in der Reinigungsstufe 14 erforderlich sein, der Reinigungsstufe 14 einen größeren Kälteinhalt zuzuführen, als dies durch die Zuführung der Gasmenge, der zur Behandlung des Produkts vorgesehen ist, erzielt werden kann. In diesem Fall muss der Reinigungsstufe 14 zusätzlich Kältemittel zugeführt werden. Das zusätzliche Kühlmittel kann beispielsweise entweder über eine separate Kühlmittelleitung durch die Reinigungsstufe 14 geführt werden, oder das zusätzliche Kühlmittel kann gemeinsam mit dem zum Behandeln des Produkts vorgesehenen Gasstrom herangeführt und nach Durchlaufen der Reinigungsstufe 14 aus der Leitung 8 ausgekoppelt werden. Andererseits ist es ebenfalls vorstellbar, dass die in der Reinigungsstufe 14 auf das Kältemittel übertragene Wärme nicht ausreicht, um die gesamte, dem Produkt zuzuführende Gasmenge zu verdampfen. In diesem Falle muss eine zusätzliche Verdampfungseinrichtung vorgesehen sein, etwa eine Heizeinrichtung oder eine Bypassleitung mit integriertem Verdampfer, durch die ein Teil des Gases verdampft und an der Reinigungsstufe 14 vorbei zum Reaktor 1 gefördert wird.

Die in den Ausführungsbeispielen gezeigten Strömungsführungen können durch mehrere aufeinander folgende Reinigungsstufen 14 auch miteinander kombiniert werden. So kann beispielsweise der beladene Gasstrom vollständig eine erste Reinigungsstufe durchlaufen, um beispielsweise die Beladung des Gasstroms auf einen Wert zu reduzieren, der den in Bezug auf diesen Stoff vorgeschriebenen werden. So kann beispielsweise der beladene Gasstrom vollständig eine erste Reinigungsstufe durchlaufen, um beispielsweise die Beladung des Gasstroms auf einen Wert zu reduzieren, der den in Bezug auf diesen Stoff vorgeschriebenen Grenzwerten genügt. Anschließend verzweigt sich der Gasstrom, woraufhin lediglich der dem unbeladenen Gasstrom wieder zuzuführende Teilstrom eine weitere Reinigungsstufe durchläuft, um die Beladung weiter zu verringern.

Die Einspeisung des gereinigten Teilstroms in die Leitung 8 erfolgt in allen drei Ausführungsbeispielen mittels eines Injektors 18. Bei dem nach Art einer VenturiDüse aufgebautem Injektor 18 handelt es sich um eine Engstelle innerhalb der Leitung 8, in die die Leitung 15 einmündet. Aufgrund der hohen Strömungsgeschwindigkeit des unbeladenen Gases innerhalb des Injektors 18 wird auf das in der Leitung 15 befindliche Gas eine Sogwirkung ausgeübt, und das Gas aus der Leitung 15 strömt in die Leitung 8 ein. Eine Pumpe zum Fördern des Gases in der Leitung 15 ist somit nicht erforderlich, jedoch im Rahmen der Erfindung nicht ausgeschlossen. Die Saugleistung am Injektor 18 hängt im Wesentlichen vom Kompressionsfaktor ab, also vom Differenzdruck zwischen dem Druck in der Engstelle und dem Ausgang des Injektors 18 sowie vom Druck des unbeladenen Gases am Eingang des Injektors 18 ab. Bei einer entsprechenden Auslegung des Injektors 18 ist es möglich, die gleiche Menge an gereinigtem Gas einzusaugen, wie an unbeladenem Gas durch den Injektor 18 hindurchgeführt wird.

Durch die Reinigung und Rückführung eines Teilstroms des beladenen Gases in den unbeladenen Gasstrom wird der Verbrauch an Gas um bis zu 50% gegenüber einer Verfahrensführung ohne Rückeinspeisung reduziert. Zugleich verringert der Einsatz eines Injektors den Energieverbrauch deutlich. Durch die Erfindung wird damit eine kostengünstige Möglichkeit geschaffen, den Gas- und Energieverbrauch bei einer Vorrichtung zum Behandeln eines Produkts mit einem Gasstrom deutlich zu senken.

### Bezugszeichenliste

- 1.: Reaktor
- 2.: Zuführung
- 3.: Ausleitung
- 4.: -
- 5.: Tank
- 6.: Kaltvergaser
- 7.: Leitung
- 8.: Leitung
- 9.: -
- 10.: Ableitung
- 11.: -
- 12.: Verzweigungsstelle
- 13.: Abgasleitung
- 14.: Reinigungsstufe
- 15.: Leitung
- 16.: Zuleitung (für kryogenes Kältemittel)
- 17.: Ableitung (für Kondensat)
- 18.: Injektor

## Patentansprüche

1. Verfahren zum Behandeln eines Produkts mit einem Gasstrom, bei dem der Gasstrom durch Kontakt mit dem Produkt mit einem Stoff beladen wird, und der Gasstrom anschließend zumindest teilweise vom beladenen Stoff befreit wird, wobei vom beladenen Gasstrom ein Teilstrom abgetrennt und dem unbeladenen Gasstrom zugeführt wird, wobei der abgetrennte Teilstrom des beladenen Gasstroms eine Reinigungsstufe (14) durchläuft,
**dadurch gekennzeichnet,**
**dass** in der Reinigungsstufe (14) der abgetrennte Teilstrom mit dem Kälteinhalt eines kryogenen Mediums in thermischen Kontakt gebracht wird, wobei als kryogenes Medium in der Reinigungsstufe (14) verflüssigtes Gas zum Einsatz kommt, dass beim Wärmetausch mit dem abgetrennten Teilstrom verdampft und dem unbeladenen Gasstrom zugeführt wird.

2. Verfahren nach Anspruch 1, **dadurch gekennzeichnet, dass** der Teilstrom an einem Injektor (18) aufgrund des Venturi-Effekts in den unbeladenen Gasstrom eingesaugt wird.

3. Vorrichtung zum Behandeln eines Produkts mit einem Gasstrom, mit einem Reaktor (1) in dem das mit einem Stoff beladene Produkt mit dem Gasstrom in Kontakt gebracht und der Gasstrom mit dem Stoff beladen wird, einer Zuleitung (8) für den unbeladenen Gastrom und einer Ableitung (10) für den mit dem Stoff beladenen Gasstrom, mit einer Reinigungsstufe (14) zum Reinigen von zumindest einem Teilstrom des beladenen Gasstroms und Mitteln (15, 18) zum Zuführen des gereinigten Teilstroms in den unbeladenen Gasstrom,
**dadurch gekennzeichnet,**
**dass** als Reinigungsstufe (14) eine kryogene Gasreinigungseinrichtung zum Einsatz kommt, bei der zumindest der abgetrennte Teilstrom in wenigstens einem Wärmetauscher mit dem Kälteinhalt eines kryogenen Mediums in thermischen Kontakt gebracht wird, wobei als kryogenes Medium der unbeladene Gasstrom zum Einsatz kommt.

4. Vorrichtung nach Anspruch 3, **dadurch gekennzeichnet, dass** die Mittel zum Zuführen des gereinigten Teilstroms einen Injektor (18) vom Venturi-Typ umfassen.

5. Vorrichtung nach Anspruch 3 oder 4, **dadurch gekennzeichnet, dass** die Reinigungsstufe (14) ein Filter, ein Zyklon oder einen Separator umfasst.

6. Vorrichtung nach einem der Ansprüche 3 bis 5, **dadurch gekennzeichnet, dass** die Reinigungsstufe (14) einen Adsorber umfasst.

7. Vorrichtung nach einem der Ansprüche 3 bis 6, **dadurch gekennzeichnet, dass** die Reinigungsstufe (14) eine konventionelle Kältemaschine umfasst.

## Claims

1. Method for treating a product with a gas flow, in which the gas flow is loaded with a substance by contact with the product, and the gas flow is subsequently at least partly freed of the loaded substance, a partial flow being separated from the loaded gas flow and fed to the unloaded gas flow, the separated partial flow of the loaded gas passing through a cleaning stage (14),
**characterized**
**in that** in the cleaning stage (14) the separated partial flow is brought into thermal contact with the refrigerating content of a cryogenic medium, the agent that is used as the cryogenic medium in the cleaning stage (14) being liquefied gas, which evaporates when there is heat exchange with the separated partial flow and is fed to the unloaded gas flow.

2. Method according to Claim 1, **characterized in that** the partial flow is sucked into the unloaded gas flow due to the venturi effect at an injector (18).

3. Device for treating a product with a gas flow, comprising a reactor (1), in which the product loaded with a substance is brought into contact with the gas flow and the gas flow is loaded with the substance, a feed line (8) for the unloaded gas flow and a discharge line (10) for the gas flow loaded with the substance, with a cleaning stage (14) for cleaning at least a partial flow of the loaded gas flow and means (15, 18) for feeding the cleaned partial flow into the unloaded gas flow,
**characterized**
**in that** the device that is used as the cleaning stage (14) is a cryogenic gas cleaning device, in which at least the separated partial flow is brought into thermal contact with the refrigerating content of a cryogenic medium in at least one heat exchanger, the unloaded gas flow being used as the cryogenic medium.

4. Device according to Claim 3, **characterized in that** the means for feeding the cleaned partial flow comprise an injector (18) of the venturi type.

5. Device according to Claim 3 or 4, **characterized in that** the cleaning stage (14) comprises a filter, a cyclone or a separator.

6. Device according to one of Claims 3 to 5, **characterized in that** the cleaning stage (14) comprises an adsorber.

7. Device according to one of Claims 3 to 6, **characterized in that** the cleaning stage (14) comprises a conventional refrigerating machine.

## Revendications

1. Procédé destiné au traitement d'un produit avec un flux gazeux, lors duquel, par contact avec le produit, on charge le flux gazeux d'une substance et on libère ensuite le flux gazeux au moins en partie de la substance chargée, un flux partiel étant séparé du flux gazeux chargé et amené vers le flux gazeux non chargé, le flux partiel séparé du flux gazeux chargé traversant une étape d'épuration (14),
**caractérisé en ce que**
dans l'étape d'épuration (14), on met en contact thermique le flux partiel séparé avec la teneur en froid d'un agent cryogène, en tant qu'agent cryogène dans l'étape d'épuration (14) étant utilisé du gaz liquéfié, qui s'évapore lors de l'échange thermique avec le flux partiel séparé et qui est amené vers le flux gazeux non chargé.

2. Procédé selon la revendication 1, **caractérisé en ce que** le flux partiel est aspiré au niveau d'un injecteur (18) du fait de l'effet Venturi dans le flux gazeux non chargé.

3. Dispositif destiné au traitement d'un produit avec un flux gazeux, avec un réacteur (1) dans lequel on met en contact le produit chargé d'une substance avec le flux gazeux et on charge le flux gazeux avec la substance, un conduit d'arrivée (8) pour le flux gazeux non chargé et un conduit d'évacuation (10) pour le flux gazeux chargé avec la substance, avec une étape d'épuration (14) pour épurer au moins un flux partiel du flux gazeux chargé et des moyens (15, 18) pour amener le flux partiel épuré dans le flux gazeux non chargé
**caractérisé en ce**
**qu'**en tant qu'étape d'épuration (14), on utilise uns installation cryogène d'épuration de gaz, dans laquelle au moins le flux partiel séparé est mis en contact thermique dans au moins un échangeur thermique avec la teneur en froid d'un agent cryogène, en tant qu'agent cryogène étant utilisé le flux gazeux non chargé.

4. Dispositif selon la revendication 3, **caractérisé en ce que** les moyens pour amener le flux partiel épuré comprennent un injecteur (18) de type Venturi.

5. Dispositif selon la revendication 3 ou la revendication 4, **caractérisé en ce que** l'étape d'épuration (14) comprend un filtre, un cyclone ou un séparateur.

6. Dispositif selon l'une quelconque des revendications 3 à 5, **caractérisé en ce que** l'étape d'épuration (14) comprend un adsorbeur.

7. Dispositif selon l'une quelconque des revendications 3 à 6, **caractérisé en ce que** l'étape d'épuration (14) comprend une machine frigorifique conventionnelle.
